# EUROPÄISCHE PATENTSCHRIFT

(11) **EP 3 755 909 B1**
(45) Veröffentlichungstag und Bekanntmachung des Hinweises auf die Patenterteilung: **20.04.2022**
(21) Anmeldenummer: 19708793.5
(22) Anmeldetag: 20.02.2019
(51) Int. Cl.: F16C 11/06

(54) **KUGELGELENK, INSBESONDERE FÜR FAHRWERKSTEILE EINES KRAFTFAHRZEUGS**
BALL JOINT, IN PARTICULAR FOR A SUSPENSION OF A VEHICLE
ROTULE, EN PARTICULIER POUR UNE SUSPENSION D'UN VEHICULE

(30) Priorität: 20.02.2018 DE 102018103780
(43) Veröffentlichungstag der Anmeldung: 30.12.2020
(73) Patentinhaber: THK Rhythm Automotive GmbH, 40233 Düsseldorf (DE)
(72) Erfinder: SCHAUMANN, Lothar, 40233 Düsseldorf (DE); WALTER, Harald, 40233 Düsseldorf (DE)
(74) Vertreter: Prinz & Partner mbB
(86) Internationale Anmeldenummer: PCT/EP2019/054221
(87) Internationale Veröffentlichungsnummer: WO 2019/162330

(56) Entgegenhaltungen:
- EP-A1- 2 465 713
- US-A1- 2009 152 834

## Beschreibung

Die Erfindung betrifft ein Kugelgelenk, das einen Kugelzapfen aufweist, der mittels zweier Lagerschalen innerhalb eines Gehäuses aufgenommen ist.

Kugelgelenke sind in den verschiedensten Ausgestaltungen bekannt. Bei Kugelgelenken, die für Fahrwerksteile eines Kraftfahrzeugs vorgesehen sind, sind die übliche Anforderungen, dass der Kugelzapfen mit hohen Auszugskräften im Gehäuse aufgenommen ist, dass ein präzise definiertes Reibmoment zwischen Kugelzapfen und Lagerschale wirkt und dass sich ein geringer Verschleiß ergibt.

Aus der EP 2 284 408 A1 ist ein Kugelgelenk bekannt, bei dem die beiden Lagerschalen innerhalb eines Metallgehäuses angeordnet und dann mit Kunststoff umspritzt werden. Das Gehäuse ist innenseitig mit einer Rändelung versehen, so dass der Kunststoff mechanisch innerhalb des Gehäuses gehalten ist.

Die EP 2 465 713 A1 offenbart ein Kugelgelenk mit einem zweiteiligen Lager, in dem ein Kugelzapfen gelagert ist und das von einem Gehäuse umspritzt ist, wobei die Lagerschalen in einem gegenseitigen Kontaktbereich vollflächig am Kugelzapfen anliegen.

In der US 2009/0152834 A1 ist ein Kugelgelenk mit einem Gehäuse beschrieben, das eine Lagerschale umschließt, in der ein Kugelzapfen aufgenommen ist, wobei in der Lagerschale mehrere Nuten und Öffnungen ausgelassen sind, um ein Schmierkanalsystem zu bilden.

Die Aufgabe der Erfindung besteht darin, ein Kugelgelenk zu schaffen, das sich durch bessere Leistungswerte auszeichnet und kostengünstig hergestellt werden kann.

Zur Lösung dieser Aufgabe ist erfindungsgemäß ein Kugelgelenkt vorgesehen mit einem Kugelzapfen, der einen Kugelabschnitt aufweist, zwei Lagerschalen, die jeweils einen Umfangsrand haben und auf dem Kugelabschnitt so angeordnet sind, dass ihre Umfangsränder sich in einem Abstand größer 0 gegenüberliegen, und einem Gehäuse, das einstückig aus Kunststoff besteht, wobei die beiden Lagerschalen so mit dem das Gehäuse bildenden Kunststoff umspritzt sind, dass sie vom Gehäuse umschlossen sind und dass sie vom Gehäuse gegen den Kugelabschnitt beaufschlagt werden. Dieses Kugelgelenk weist geringe Herstellungskosten auf, da der Kunststoff, der die beiden Lagerschalen umschließt, als Gehäuse wirkt, das in direktem Kontakt mit den beiden Lagerschalen steht und die nötige Festigkeit und Stabilität aufweist. Es ist kein Außengehäuse erforderlich. Auch umgeht diese Konstruktion das im Stand der Technik auftretende Problem, dass der Kunststoff, der um die Lagerschalen herum gespritzt wird, beim Aushärten schwindet, was eine zuverlässige Verbindung mit dem eigentlichen Gehäuse erschwert. Das erfindungsgemäße Kugelgelenk hat weiterhin den Vorteil, dass die Schwindung des Kunststoffmaterials, mit dem die Lagerschalen umspritzt werden, zielgerichtet in einen Anpressdruck umgesetzt werden kann, mit dem die Lagerschalen gegen den Kugelabschnitt beaufschlagt werden, da die beiden Lagerschalen wegen des zwischen ihnen vorhandenen Spalts, der frei von Material etc. ist, in axialer Richtung relativ zum Kugelabschnitt verschiebbar sind. Im Stand der Technik stützen sich dagegen die Lagerschalen aneinander ab, so dass sie insgesamt stark verformt werden müssen, falls sie mit einer Vorspannkraft gegen den Kugelabschnitt gedrückt werden sollen.

Gemäß einer Ausführungsform der Erfindung ist vorgesehen, dass die Lagerschalen wechselseitige Eingriffsabschnitte aufweisen, so dass sie in radialer Richtung und in Umfangsrichtung zentriert sind, jedoch in axialer Richtung relativ zueinander verschiebbar sind. Die Eingriffsabschnitte gewährleisten, dass die beiden Lagerschalen relativ zueinander auch dann zentriert bleiben, wenn sie in einer Spritzgussform angeordnet sind und flüssiger Kunststoff in die Spritzgussform eingedrückt wird.

Die Eingriffsabschnitte sind in Umfangsrichtung unterbrochen ausgeführt.

Besonders vorteilhaft ist, wenn die Eingriffsabschnitte in Umfangsrichtung betrachtet dicht aneinander anliegen. Hierdurch kann ohne zusätzliche Maßnahmen gewährleistet werden, dass das flüssige Kunststoffmaterial beim Umspritzen nicht in den Bereich zwischen den beiden Lagerschalen und/oder auf den Kugelabschnitt gelangen kann; dies wäre für die Funktionsweise des Kugelgelenks nachteilig.

Vorzugsweise bilden die Eingriffsabschnitte zusammen einen nach außen vorstehenden Bund bilden, der vom Material des Gehäuses fest umschlossen ist. Der Bund hilft, die beiden Lagerschalen zuverlässig innerhalb des Kunststoff-Gehäuses zu verankern.

Vorzugsweise verrasten die Eingriffsabschnitte der einen Lagerschale mit der anderen Lagerschale. Diese ermöglicht, die beiden Lagerschalen auf dem Kugelzapfen vorzumontieren, so dass sie mit diesem als eine Baugruppe in einer Spritzgussform angeordnet werden kann.

Gemäß einer Ausgestaltung der Erfindung ist vorgesehen, dass die Lagerschalen auf ihrer Außenseite taschenförmige Vertiefungen aufweisen. Die taschenförmigen Vertiefungen führen zu einer zielgerichteten Verringerung der Wandstärke der Lagerschalen, so dass dort die Nachgiebigkeit der Lagerschalen in radialer Richtung und damit die Anpresskraft eingestellt werden kann, mit der die Lagerschalen gegen den Kugelabschnitt gedrückt werden.

Vorzugsweise beträgt die Wandstärke der Lagerschalen am Boden der Vertiefungen weniger als 50% der Wandstärke der Lagerschalen zwischen benachbarten Vertiefungen, so dass die Elastizität der Lagerschalen im Bereich des Bodens der Taschen erheblich erhöht ist.

Gemäß einer Ausgestaltung der Erfindung ist vorgesehen, dass die Lagerschalen mit Schmiermittelnuten versehen sind, die an den axialen Enden der Lagerschalen münden. Dies ermöglicht es, das Kugelgelenk nachträglich zu befetten, also nachdem das Gehäuse auf die Lagerschalen aufgespritzt wurde.

Das Gehäuse kann mit Ausnehmungen versehen sein, die sich ausgehend von den axialen Stirnseiten zum Mitte hin erstrecken. Mit den Ausnehmungen kann die Steifigkeit des Gehäuses und damit die Vorspannung, die vom Gehäuse auf die Lagerschalen ausgeübt wird, zielgerichtet eingestellt werden. Außerdem führen die Ausnehmungen zu einer Gewichtseinsparung.

Gemäß einer Ausgestaltung der Erfindung ist vorgesehen, dass das Gehäuse an den Lagerschalen anhaftet. Dies kann durch erzielt werden, dass die Lagerschalen mit Kunststoffmaterial umspritzt werden, dass sich auf einer geeigneten Temperatur befindet, so dass die Lagerschalen außenseitig geringfügig angeschmolzen werden. Außerdem wird für das Kunststoff-Gehäuse ein Material verwendet, das mit dem Material der Lagerschalen eine stoffschlüssige Verbindung eingehen kann. Beispielsweise wird für das Gehäuse dasselbe Material verwendet wie für die Lagerschalen.

Die Erfindung wird nachfolgend anhand einer Ausführungsform beschrieben, die in den beigefügten Zeichnungen dargestellt ist. In diesen zeigen:
- Figur 1 ein erfindungsgemäßes Kugelgelenk in einem Längsschnitt;
- Figur 2 das Kugelgelenk von Figur 1 in einer perspektivischen Ansicht;
- Figur 3 in einem Schnitt schematische eine Lagerschale des Kugelgelenks von Figur 1, wobei die Lagerschale auf ihrer Außenseite mit taschenförmigen Vertiefungen versehen ist ;
- Figur 4 die Lagerschale von Figur 3 in einer perspektivischen Ansicht;
- Figur 5 in einem Schnitt schematisch eine Lagerschale des Kugelgelenks von Figur 1, wobei die Lagerschale auf ihrer Innenseite mit Schmiermittelnuten versehen ist;
- Figur 6 die Lagerschale von Figur 5 in einer perspektivischen Ansicht,
- Figur 7 in einer perspektivischen Ansicht einen Schritt bei der Vormontage des erfindungsgemäßen Kugelgelenks;

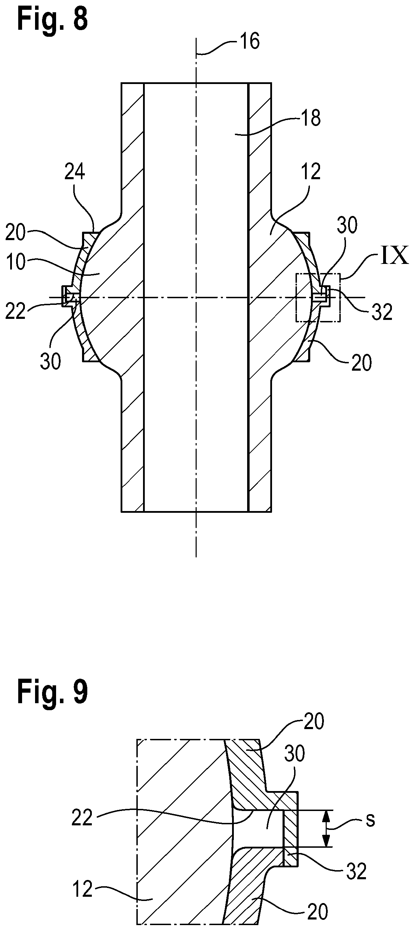

- Figur 8 in einer Schnittansicht eine vormontierte Baugruppe aus Kugelzapfen und Lagerschalen vor dem Umspritzen; und
- Figur 9 das Detail IX von Figur 8 in vergrößertem Maßstab.

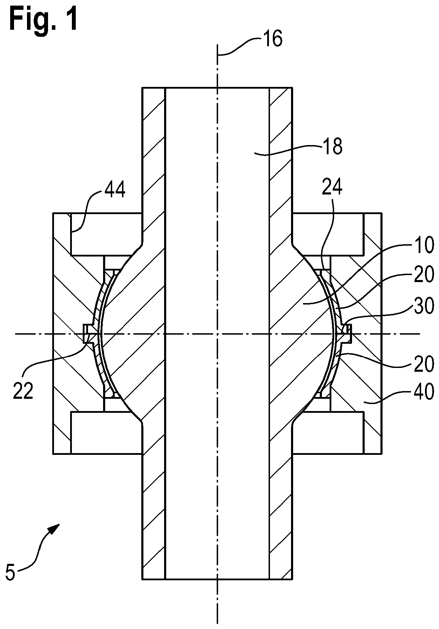

In den Figuren 1 und ist ein Kugelgelenk 5 zu sehen, das als wesentliche Bauteile einen Kugelzapfen 10, zwei Lagerschalen 20 und ein Gehäuse 40 aufweist.

Der Kugelzapfen 10 weist einen Kugelabschnitt 12 auf, von dem ausgehend sich an entgegengesetzten Enden jeweils ein Zapfen 14 erstreckt. Die beiden Zapfen sind konzentrisch zu einer Mittelachse 16 angeordnet, die auch durch den Mittelpunkt des Kugelabschnittes 12 verläuft.

Zur Vereinfachung der Erläuterung sei nachfolgend angenommen, dass die Mittelachse 16 sich durch die "Pole" der dem Kugelabschnitt 12 zugrundeliegenden Kugel erstreckt. Somit erstreckt sich die Außenfläche des Kugelabschnitts 12 bei der gezeigten Ausführungsform entlang des "Äquators" des Kugelabschnittes 12. Bis zu welchem "Breitengrad" sich die Außenfläche des Kugelabschnitts 12 erstreckt, hängt ab vom Durchmesser der Zapfen 14. Beim gezeigten Ausführungsbeispiel erstreckt sich die Außenfläche bis zu einem Niveau von etwa ± 40°.

Grundsätzlich ist auch denkbar, dass nur ein Zapfen 14 vorhanden ist.

Bei der gezeigten Ausführungsform ist der Kugelzapfen 10 hohl. Anders ausgedrückt: es gibt einen Hohlraum 18, der sich durch die beiden Zapfen 14 und den Kugelabschnitt 12 hindurch erstreckt.

Der Kugelzapfen 10 besteht bei der gezeigten Ausführungsform aus Metall, insbesondere aus Stahl.

Die beiden Lagerschalen 20 sind jeweils in Umfangsrichtung umlaufend ausgeführt. Sie weisen einen innenliegenden Umfangsrand 22 und einen außenliegenden Umfangsrand 24 auf. Der innenliegende Umfangsrand 22 ist dabei auf der Seite des Äquators des Kugelabschnittes 12 angeordnet, während der außenliegende Umfangsrand 24 auf der Seite der Zapfen 14 angeordnet ist.

Die Innenfläche jeder Lagerschale 20 hat die Form eines Kugelabschnitts.

Die Lagerschalen bestehen aus Kunststoff, wobei eine Vielzahl von Thermoplasten und Duroplasten verwendet werden kann.

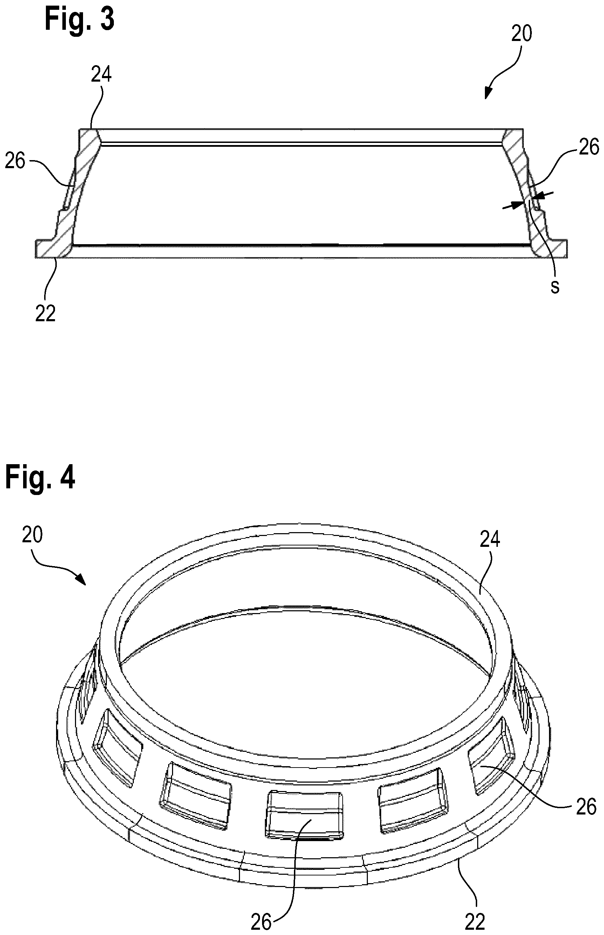

Wie in den Figuren 3 und 4 zu sehen ist, weist jede Lageschale 20 auf ihrer Außenseite, also der vom Kugelabschnitt 12 abgewandten Seite, mehrere taschenartige Vertiefungen 26 auf.

Jede Vertiefung 26 ist in sich abgeschlossen, weist also einen Umfangsrand 28 auf, der die Vertiefung 26 von der Außenseite der Lagerschale 20 abgrenzt.

Die Vertiefungen 26 dienen dazu, lokal die Wandstärke der Lagerschalen 20 zu verringern. Im gezeigten Ausführungsbeispiel beträgt die Wandstärke s am Boden der Vertiefungen weniger als 50% der Wandstärke der Lagerschalen 20 im Bereich zwischen den Vertiefungen 26.

Die Abmessungen der Vertiefungen können an die jeweiligen Anforderungen angepasst werden. Im gezeigten Ausführungsbeispiel beträgt die Höhe der Vertiefungen, also gemessen parallel zur Mittelachse 16, in der Größenordnung von 30 % der Höhe der entsprechenden Lagerschale.

Der Abstand zwischen benachbarten Vertiefungen 26, gemessen in Umfangsrichtung, beträgt im gezeigten Ausführungsbeispiel etwa 50 % der Breite jeder Vertiefung 26.

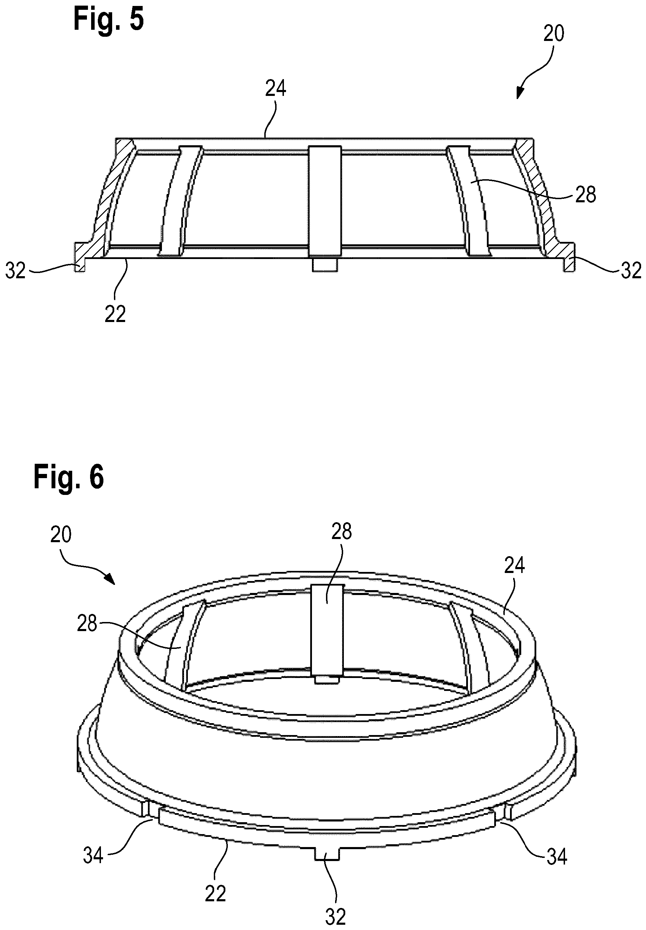

Wie in den Figuren 5 und 6 zu sehen ist, weist jede Lagerschale 20 auf ihrer Innenfläche, also der Seite, die mit der Außenfläche des Kugelabschnittes 12 zusammenwirkt, mehrere Schmiermittelnuten 28 auf. Diese münden am außenliegenden Umfangsrand 24.

Beim gezeigten Ausführungsbeispiel erstrecken sich die Schmiermittelnuten 28 in der Richtung von Längengraden auf dem Kugelabschnitt. Es ist alternativ auch möglich, dass sich die Schmiermittelnuten mit einem von 0° verschiedenen Winkel schräg zu den Längengraden erstrecken.

Die taschenartigen Vertiefungen 26 und die Schmiermittelnuten 28 sind hier an unterschiedlichen Lagerschalen 20 gezeigt. In der Praxis kann das Kugelgelenk 5 entweder die taschenartigen Vertiefungen 26 aufweisen oder die Schmiermittelnuten 28 oder sowohl die taschenartigen Vertiefungen 26 als auch die Schmiermittelnuten 28.

Zwischen den beiden Lagerschalen 20 befindet sich, wenn sie auf dem Kugelabschnitt 12 vormontiert sind, ein kleiner Spalt 30. Anders ausgedrückt: die beiden inneren Umfangsränder 22 der Lagerschalen 20 liegen einander mit einem Abstand gegenüber, der gleich der Breite des Spalts 30 ist. Daher verläuft der Spalt entlang des Äquators des Kugelabschnittes 12 (unter der Annahme, dass die beiden Lagerschalen exakt auf dem Kugelabschnitt 12 zentriert angeordnet sind).

Die inneren Umfangsränder 22 der Lagerschalen sind wechselseitig mit Eingriffsabschnitten 32, 34 versehen. "Wechselseitig" bedeutet dabei, dass die an einer Lagerschale 20 angeordneten Eingriffsabschnitte 32 mit den Eingriffsabschnitten 34 zusammenwirken, die an der anderen Lagerschale 20 vorgesehen sind.

Insbesondere ist ein Eingriffsabschnitt 32 einer Lagerschale 20 zwischen zwei benachbarten Eingriffsabschnitten 34 der anderen Lagerschale 20 angeordnet.

Ein Beispiel von wechselseitig angeordneten Eingriffsabschnitten 32, 34 ist in den Figuren 5 und 6 gezeigt. Jeder der Lagerschalen 20 ist mit schmalen, in axialer Richtung vorstehenden Stegen 32 versehen, die in korrespondierende Schlitze 34 der anderen Lagerschale 20 eingreifen.

Die miteinander zusammenwirkenden Eingriffsabschnitte sorgen für einen Formschluss zwischen den beiden Lagerschalen 20 in Umfangsrichtung und zentrieren sie relativ zueinander. Gleichzeitig ermöglichen sie, dass die beiden Lagerschalen in axialer Richtung relativ zueinander verschoben werden können.

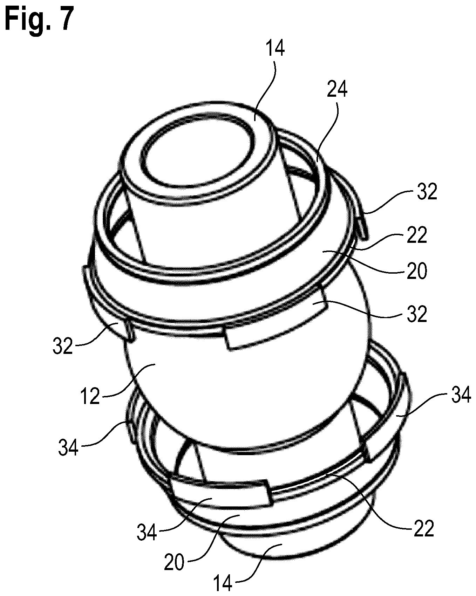

In Figur 7 ist eine weitere Ausgestaltung der Eingriffsabschnitte 32, 34 gezeigt. Der Unterschied zur in den Figuren 5 und 6 gezeigten Ausgestaltung besteht darin, dass die Eingriffsabschnitte 32, 34 als außenliegende Schürzen ausgestaltet sind, die radial außerhalb der einander gegenüberliegenden inneren Umfangsränder 22 angeordnet sind und über diese in axialer Richtung zur gegenüberliegenden Lageschale 20 hin vorstehen.

Weiterhin sind die Eingriffsabschnitte 32 der einen Lagerschale 20 in Umfangsrichtung so breit wie die Eingriffsabschnitte 34 der anderen Lagerschale 20. Somit liegt eine Schürze 32 der einen Lagerschale zwischen zwei benachbarten Schürzen 34 der anderen Lagerschale.

Die Eingriffsabschnitte 32, 34 sind mit einer Übergangspassung oder einer Spielpassung mit sehr kleinem Spiel dimensioniert. Daher schließen die Schürzen 32, 34 den Spalt 30 zwischen den Lagerschalen 20 nach außen ab, während die beiden Lagerschalen 20 dennoch in axialer Richtung relativ zueinander verschiebbar sind.

Die Schürzen 32, 34 sind vorzugsweise an ihrem vorderen Rand mit einer kleinen Rastkante versehen, die mit dem inneren Umfangsrand 22 der anderen Lagerschale zusammenwirken kann, so dass die beiden Lagerschalen aneinander vormontiert werden können.

Um das Kugelgelenk 5 herzustellen, werden in einem ersten Schritt zwei Lagerschalen 20 auf dem Kugelabschnitt 12 vormontiert. Hierzu werden sie von entgegengesetzten Richtungen über die Zapfen 14 geschoben, bis sie auf dem Kugelabschnitt 12 angeordnet sind. Dabei rasten die Schürzen 32, 34 am inneren Umfangsrand 22 der jeweils anderen Lagerschale 20 ein, so dass die beiden Lagerschalen unverlierbar auf dem Kugelzapfen 10 vormontiert sind.

Falls gewünscht, können die Lagerschalen 20 und/oder der Kugelabschnitt 12 gefettet werden, bevor die Lagerschalen 20 montiert werden.

Die so vormontierte Baugruppe wird in eine Spritzgussform eingelegt, und die beiden Lagerschalen 20 werden mit einem Kunststoff umspritzt, der das Gehäuse 40 bildet. An den axialen Enden der beiden Lagerschalen 20 dichtet die Spritzgussform ab, so dass dort kein Material auf den Kugelzapfen 10 gelangen kann.

Zwischen den beiden Lagerschalen 20 dichten die Eingriffsabschnitte 32, 34 so ab, dass kein Material zwischen die beiden Lagerschalen 20 gelangen kann, also der Spalt 30 freibleibt.

Beim Aushärten des Gehäuses 40 sorgt die Schwindung des Kunststoffmaterials dafür, dass die beiden Lagerschalen 20 in axialer Richtung zusammengeschoben werden. Da der Spalt 30 zwischen den beiden Lagerschalen 20 vorhanden ist, wird der Schwindungsdruck in eine Vorspannung umgesetzt, mit der die Innenfläche der Lagerschalen 20 gegen den Kugelabschnitt 12 des Kugelzapfens gedrückt wird.

Der Schwindungsdruck, den das Gehäuse 40 auf die Lagerschalen 20 ausübt, sorgt auch dafür, dass die Lagerschalen in radialer Richtung gegen den Kugelabschnitt 12 gedrückt werden. Die sich damit einstellende Vorspannung zwischen den Lagerschalen 20 und dem Kugelabschnitt 12 kann noch durch die gewählten Dimensionen der taschenartigen Vertiefungen 26 eingestellt werden. Je geringer die verbleibende Wandstärke am Boden der taschenartigen Vertiefungen 26, desto geringer ist die Steifigkeit der Lagerschalen 20 in diesen Bereichen und desto größer ist die Vorspannung, mit der die Lagerschalen 20 in diesen Bereichen gegen den Kugelabschnitt 12 gedrückt wird.

Die Spritzgussform ist so dimensioniert, dass das Gehäuse 40 als solches eigenstabil ist und die Lagerschalen 20 so fest umschließt, dass alle im Betrieb später auftretenden Belastungen vom Gehäuse 40 aufgenommen werden können.

Bei geeigneter Temperaturführung beim Spritzgießen und bei geeigneter Auswahl der Materialien für die Lagerschalen 20 und das Gehäuse 40 verbindet sich das Gehäuse mit den Lagerschalen 20. Ungeachtet einer eventuellen stoffschlüssigen Verbindung zwischen den Lagerschalen 20 und dem Gehäuse 40 umschließt das Gehäuse 40 die Lagerschalen 20 formschlüssig. So wird der Bund, der von den Eingriffsabschnitten 32, 34 gebildet wird, vom Gehäuse 40 umgriffen. Außerdem greift das Gehäuse 40 in die taschenartigen Vertiefungen 26 ein.

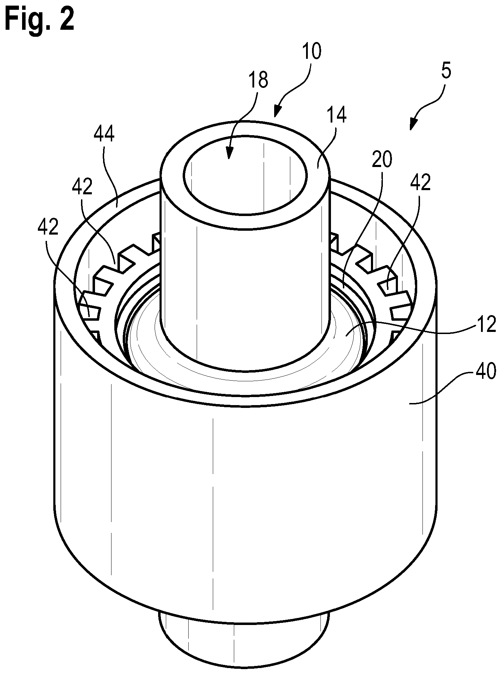

Das Gehäuse 40 kann mit mehreren Ausnehmungen 42 versehen sein, die in Figur 2 zu sehen sind. Die Ausnehmungen können der Gewichtsersparnis dienen. Außerdem kann durch Auswahl der Breite, der Tiefe, bis zu der sich die Ausnehmungen 42 in axialer Richtung ins Gehäuse hinein erstrecken, und der Position der Ausnehmungen 42 der Schwindungsdruck eingestellt werden, den das Gehäuse 40 auf die Lagerschalen 20 ausübt.

Das Gehäuse 40 kann mit in Figur 2 schematisch angedeuteten Befestigungsabschnitte 44 versehen sein, an denen jeweils ein Ende eines Dichtungsbalgs angebracht werden kann. Das andere Ende des Dichtungsbalgs kann am Zapfen 14 angebracht sein.

Nachdem das Kugelgelenk 5 aus der Spritzgussform entnommen wurde, kann es noch mit Fett oder einem anderen Schmiermittel befüllt werden. Hierfür wird das Fett über die axial mündenden Schmiermittelnuten 28 in das Gelenk eingedrückt.

## Patentansprüche

1. Kugelgelenk (5) mit einem Kugelzapfen (10), der einen Kugelabschnitt (12) aufweist, zwei Lagerschalen (20), die jeweils einen Umfangsrand (22) haben und auf dem Kugelabschnitt (12) so angeordnet sind, dass ihre Umfangsränder (22) sich in einem Abstand größer 0 gegenüberliegen, und einem Gehäuse (40), das einstückig aus Kunststoff besteht, wobei die beiden Lagerschalen (20) so mit dem das Gehäuse (40) bildenden Kunststoff umspritzt sind, dass sie vom Gehäuse (40) umschlossen sind und dass sie vom Gehäuse (40) gegen den Kugelabschnitt (12) beaufschlagt werden.

2. Kugelgelenk nach Anspruch 1, **dadurch gekennzeichnet, dass** die Lagerschalen (20) wechselseitige Eingriffsabschnitte (32, 34) aufweisen, so dass sie in radialer Richtung und in Umfangsrichtung zentriert sind, jedoch in axialer Richtung relativ zueinander verschiebbar sind.

3. Kugelgelenk nach Anspruch 2, **dadurch gekennzeichnet, dass** die Eingriffsabschnitte (32, 34) in Umfangsrichtung betrachtet dicht aneinander anliegen.

4. Kugelgelenk nach Anspruch 3, **dadurch gekennzeichnet, dass** die Eingriffsabschnitte (32, 34) zusammen einen nach außen vorstehenden Bund bilden, der vom Material des Gehäuses (40) fest umschlossen ist.

5. Kugelgelenk nach einem der Ansprüche 2 bis 4, **dadurch gekennzeichnet, dass** die Eingriffsabschnitte (32, 34) der einen Lagerschale (20) mit der anderen Lagerschale (20) verrasten.

6. Kugelgelenk nach einem der vorhergehenden Ansprüche, **dadurch gekennzeichnet, dass** die Lagerschalen (20) auf ihrer Außenseite taschenförmige Vertiefungen (28) aufweisen.

7. Kugelgelenk nach Anspruch 6, **dadurch gekennzeichnet, dass** die Wandstärke der Lagerschalen (20) am Boden der Vertiefungen (28) weniger als 50% der Wandstärke der Lagerschalen (20) zwischen benachbarten Vertiefungen (28) beträgt.

8. Kugelgelenk nach einem der vorhergehenden Ansprüche, **dadurch gekennzeichnet, dass** die Lagerschalen (20) mit Schmiermittelnuten (26) versehen sind, die an den axialen Enden der Lagerschalen (20) münden.

9. Kugelgelenk nach einem der vorhergehenden Ansprüche, **dadurch gekennzeichnet, dass** das Gehäuse (40) mit Ausnehmungen (42) versehen ist, die sich ausgehend von den axialen Stirnseiten zum Mitte hin erstrecken.

10. Kugelgelenk nach einem der vorhergehenden Ansprüche, **dadurch gekennzeichnet, dass** das Gehäuse (40) an den Lagerschalen (20) anhaftet.

## Claims

1. A ball joint (5) comprising a ball stud (10) which includes a spherical portion (12), two bearing shells (20) that each have a circumferential edge (22) and are arranged on the spherical portion (12) such that their circumferential edges (22) are positioned opposite each other at a distance greater than 0, and a housing (40) that is made from plastic in one piece, the two bearing shells (20) being overmolded with the plastic forming the housing (40) such that they are enclosed by the housing (40) and are urged against the spherical portion (12) by the housing (40).

2. The ball joint according to claim 1, **characterized in that** the bearing shells (20) include alternating engagement sections (32, 34) so that they are centered in the radial direction and in the circumferential direction, but are displaceable in relation to each other in the axial direction.

3. The ball joint according to claim 2, **characterized in that** the engagement sections (32, 34), as viewed in the circumferential direction, are closely adjacent to each other.

4. The ball joint according to claim 3, **characterized in that** the engagement sections (32, 34) together form a collar which protrudes outwards and is firmly enclosed by the material of the housing (40).

5. The ball joint according to any of claims 2 to 4, **characterized in that** the engagement sections (32, 34) of one bearing shell (20) lock in place with the other bearing shell (20).

6. The ball joint according to any of the preceding claims, **characterized in that** the bearing shells (20) have pocket-shaped depressions (28) on their outer surfaces.

7. The ball joint according to claim 6, **characterized in that** the wall thickness of the bearing shells (20) at the bottom of the depressions (28) is less than 50% of the wall thickness of the bearing shells (20) between neighboring depressions (28).

8. The ball joint according to any of the preceding claims, **characterized in that** the bearing shells (20) are provided with lubricant grooves (26) which open at the axial ends of the bearing shells (20).

9. The ball joint according to any of the preceding claims, **characterized in that** the housing (40) is provided with recesses (42) which, starting from the axial face sides, extend toward the center.

10. The ball joint according to any of the preceding claims, **characterized in that** the housing (40) adheres to the bearing shells (20).

## Revendications

1. Joint sphérique (5) comprenant un pivot sphérique (10) qui présente un tronçon sphérique (12), deux coquilles de coussinet (20) qui présentent chacune un bord périphérique (22) et qui sont agencées sur le tronçon sphérique (12) de sorte que leurs bords périphériques (22) sont opposés à une distance supérieure à 0, et un boîtier (40) qui est réalisé d'un seul tenant en matière plastique, les deux coquilles de coussinet (20) étant enrobées par injection de la matière plastique formant le boîtier (40) de manière à être entourées du boîtier (40) et à être sollicitées contre le tronçon sphérique (12) par le boîtier (40).

2. Joint sphérique selon la revendication 1, **caractérisé en ce que** les coquilles de coussinet (20) présentent des tronçons d'enclenchement mutuels (32, 34) de manière à être centrées dans le sens radial et dans le sens périphérique, mais à être déplaçables l'une par rapport à l'autre dans le sens axial.

3. Joint sphérique selon la revendication 2, **caractérisé en ce que** les tronçons d'enclenchement (32, 34), vus dans le sens périphérique, reposent les uns contre les autres de manière serrée.

4. Joint sphérique selon la revendication 3, **caractérisé en ce que** les tronçons d'enclenchement (32, 34) forment ensemble un collet qui fait saille vers l'extérieur et qui est fermement entouré du matériau du boîtier (40).

5. Joint sphérique selon l'une des revendications 2 à 4, **caractérisé en ce que** les tronçons d'enclenchement (32, 34) de l'une des coquilles de coussinet (20) s'enclenchent sur l'autre coquille de coussinet (20).

6. Joint sphérique selon l'une des revendications précédentes, **caractérisé en ce que** les coquilles de coussinet (20) présentent sur leur face extérieure des évidements (28) en forme de poche.

7. Joint sphérique selon la revendication 6, **caractérisé en ce que** l'épaisseur de paroi des coquilles de coussinet (20) au fond des évidements (28) est inférieure à 50% de l'épaisseur de paroi des coquilles de coussinet (20) entre des évidements (28) adjacents.

8. Joint sphérique selon l'une des revendications précédentes, **caractérisé en ce que** les coquilles de coussinet (20) sont pourvues de rainures de lubrifiant (26) qui débouchent aux extrémités axiales des coquilles de coussinet (20).

9. Joint sphérique selon l'une des revendications précédentes, **caractérisé en ce que** le boîtier (40) est pourvu de creux (42) qui s'étendent à partir des faces frontales axiales vers le centre.

10. Joint sphérique selon l'une des revendications précédentes, **caractérisé en ce que** le boîtier (40) adhère aux coquilles de coussinet (20).
